# EUROPÄISCHE PATENTSCHRIFT

(11) **EP 3 405 698 B1**
(45) Veröffentlichungstag und Bekanntmachung des Hinweises auf die Patenterteilung: **11.03.2020**
(21) Anmeldenummer: 17701116.0
(22) Anmeldetag: 20.01.2017
(51) Int. Cl.: F16G 13/18, F16G 13/20, E05F 15/00, E05D 15/00

(54) **AKTUATOR MIT HOHLSCHNECKE**
ACTUATOR WITH HOLLOW WORM
ACTIONNEUR ÉQUIPÉ D'UNE VIS CREUSE

(30) Priorität: 20.01.2016 DE 102016000566
(43) Veröffentlichungstag der Anmeldung: 28.11.2018
(73) Patentinhaber: IWIS Antriebssysteme GmbH & Co. KG, 81369 München (DE)
(72) Erfinder: KREISFELD, Peter, 90610 Winkelhaid (DE); TCHATCHOUA, Joel Tchaweu, 82178 Puchheim (DE); RASCH, Frank, 57234 Wilnsdorf (DE); SAHIN, Orhan, 81377 München (DE); WOLF, Thomas, 81249 München (DE); POTDAR, Abhijit, 81243 München (DE); HARTINGER, Gerhard, 82538 Geretsried (DE)
(74) Vertreter: Dantz, Dirk
(86) Internationale Anmeldenummer: PCT/EP2017/051196
(87) Internationale Veröffentlichungsnummer: WO 2017/125554

(56) Entgegenhaltungen:
- EP-A2- 2 520 827
- WO-A1-00/60202
- DE-U1- 29 604 692
- GB-A- 799 230
- JP-A- 2011 144 874

## Beschreibung

Die vorliegende Erfindung betrifft einen Aktuator mit einer rückensteifen Kette, siehe zum Beispeil EP2520827, einem Antriebsmotor und einer vom Antriebsmotor antreibbaren Schnecke, wobei die rückensteife Kette sich abwechselnde Innen- und Außenkettenglieder und diese verbindende Kettenbolzen aufweist und zumindest einige der Kettenbolzen seitlich überstehende Eingriffsbereiche aufweisen, die mit der Spindel zum Antreiben der rückensteifen Kette im Eingriff stehen.

In der EP 1353031 B2 ist eine Ausführungsform (Fig. 8) beschrieben, bei der die Kette mit seitlich vorstehenden Zähnen versehen ist, die in eine, mittels eines Motors angetriebene Spindel eingreift. Die rückensteife Kette ist an der Spindel entlanggeführt und wird im Bereich zwischen Motor und Spindel um 90° umgelenkt und zur Betätigung eines Elementes nach außen geführt. Die Spindel ist wesentlich kürzer ausgeführt, als die rückensteife Kette. Die Kraftübertragung erfolgt seitlich auf die Kette, sodass Momente in die Kette eingeleitet werden, die von den Kettengelenken aufgefangen werden müssen.

Eine handbetriebene Variante eines gleichartigen Aktuators ist in der DE 714768 beschrieben. Solche Aktuatoren dienen z. B. zum Öffnen und Schließen von Fenstern und Türen.

Ein Nachteil dieser Konstruktionen besteht in der Antriebsbelastung der Kette und dem damit verbundenen Verschleiß.

Es ist daher die Aufgabe der vorliegenden Erfindung, einen Aktuator der eingangs genannten Art hinsichtlich der Kraftübertragung auf die rückensteife Kette zu verbessern.

Diese Aufgabe wird bei einem gattungsgemäßen Aktuator dadurch gelöst, dass die Schnecke als Hohlschnecke ausgeführt ist und die Eingriffsbereiche der Kettenbolzen mit der Innenwendel der Hohlschnecke im Eingriff stehen.

Das Durchleiten der rückensteifen Kette durch eine vom Antriebsmotor angetriebene Hohlschnecke kann zu mehreren Vorteilen führen. Mittels einer Hohlschnecke kann z. B. eine symmetrische Krafteinleitung in die rückensteife Kette erfolgen. Des Weiteren kann eine Hohlschnecke stabiler ausgeführt werden bei vergleichbarer Anordnungslage in Verlängerung zur Motorachse oder leicht parallel versetzt hierzu im Vergleich zu einer Schnecke mit Außenwendel. Auch wenn die Hohlschnecke nur einseitig mit der rückensteifen Kette im Eingriff steht, kann die Öffnung der Hohlschnecke noch zusätzlich zur Abstützung der Kette verwendet werden. Zumeist sind durch die Konstruktion höhere Antriebskräfte in die rückensteife Kette einleitbar.

Bei einer besonders vorteilhaften Konstruktion ist vorgesehen, dass der Antriebsmotor in Verlängerung der Hohlschnecke angeordnet ist, bevorzugt sind Motorachse und Schneckenachse koaxial zueinander angeordnet. Wird die Schubkraft ebenfalls in Verlängerung des Antriebsmotors von diesem weg aufgebracht, dann muss in dem kraftbelasteten Bereich der rückensteifen Kette nicht zwingend eine Umlenkung erfolgen, weshalb der lastfreie Teil der rückensteifen Kette entsprechend günstig zur Unterbringung verlaufen kann. Insgesamt lässt sich hierdurch eine im Vergleich zum Stand der Technik bauraumsparendere Konstruktion erzielen.

Bevorzugt kann die Hohlschnecke mehrgängig ausgestaltet sein und entsprechend mehrere Innendwendel aufweisen. Dies bietet den Vorteil, z. B. die beiden Seiten der rückensteifen Kette mit jeweils einer anderen Innenwendel in Eingriff zu bringen

Darüber hinaus können die Kettenbolzen der rückensteifen Kette abwechselnd auf der einen Seite und auf der anderen Seite der rücksteifen Kette überstehen und entsprechende Eingriffsbereiche formen. Hierdurch ist auf einfache Weise sichergestellt, dass beide Seiten der rückensteifen Kette mit der Hohlschnecke in Eingriff kommen, sodass eine symmetrische Krafteinleitung erzielt werden kann. Insbesondere bei einer solchen Ausgestaltung besteht die Möglichkeit, dass die eine Seite der rückensteifen Kette mit einer anderen Innenwendel zum Eingriff gelangt, als die andere Seite. Hierdurch lassen sich auch schnellere Vorschubbewegungen pro Umdrehung realisieren.

Darüber hinaus kann vorgesehen werden, dass die Eingriffsmittel Elemente zur Reibungsminderung in der Form von mindestens einer drehbaren Rolle oder eines Gleitschuhs aufweisen, die in die Wendelnut der Hohlschnecke eingreifen. Gleitschuhe können z.B. die Form einer Passfeder oder die Querschnittsform einer Ellipse aufweisen. Auch eine in der Höhe ballige Passfederform oder Ellipsenform kann verwendet werden. Dabei können sämtliche Seitenflächen ballig ausgeführt werden. Die Rollen können kugelgelagert oder selbst Kugellager sein. Auch die Verwendung von Sinterrollen, die gegebenenfalls schmiermittelgetränkt sind, ist möglich.

Bei einer weiteren Ausgestaltung ist vorgesehen, dass die Eingriffsmittel Elemente zum Schlupfausgleich in der Form von mehreren nebenaneinander an einem überstehenden Kettenbolzen angeordneter drehbarer Rollen und/oder einer konisch ausgebildeten Rolle und einer daran angepassten Wendelnut aufweisen. Aufgrund von Geschwindigkeitsunterschieden über den Schneckenradius entsteht ein Schlupf an den Kontaktstellen zwischen Rolle und Hohlschnecke. Werden mehrere kürzere Rollen an einem verlängerten Bolzen angebracht, so wird jede Rolle eine andere Geschwindigkeit haben. Der Schlupf wird deutlich reduziert. Mit Zuhilfenahme der Konizität an den Rollen sowie an der Hohlschnecke, werden Geschwindigkeitsunterschiede kompensiert.

Bei einer Variante kann vorgesehen sein, dass eine sich durch die Hohlschnecke erstreckende Führung vorhanden ist, die die Vorder- und/oder die Rückseite der rückensteifen Kette führt. Hierdurch wird verhindert, dass die rückensteife Kette, außer mit den Eingriffsbereichen nicht mit Hohlschnecke in Kontakt kommt und sich nur linear durch die Hohlschnecke bewegt.

Eine besonders schlanke Ausgestaltung ergibt sich gemäß einer weiteren Ausführung dann, wenn der Antriebsmotor eine Hohlwelle aufweist, durch die die rückensteife Kette hindurchgeführt ist. Eine solche Variante eröffnet die Möglichkeit, eine Schubkraft entlang der Motorachse in beide Richtungen aufzubringen. Dies hängt maßgeblich von der Gestaltung der rückensteifen Kette ab. Es wird aber auch eine kompakte Bauweise erzielt, weil sich eine gewisse Kettenlänge im Bereich des Antriebsmotors befindet. Im Extremfall könnten Hohlschnecke und Hohlwelle auch zu einem einzigen funktionalen Element zusammengefasst werden.

Des Weiteren kann hierbei vorgesehen werden, dass eine sich durch die Hohlwelle erstreckende Führung vorhanden ist, die die Vorder- und/oder die Rückseite der rückensteifen Kette führt. Eine solche Führung kann auch einheitlich mit der Führung durch die Hohlschnecke ausgestaltet werden. Die Schiene kann auch Rollen oder Räder zur Reibungsminderung aufweisen oder durch Rollen oder Räder ersetzt werden.

Die meisten gängigen, elektrisch betriebenen Antriebsmotoren weisen für viele Anwendungszwecke eine zu große Geschwindigkeit auf. Hier bietet sich an, dass der Antriebsmotor ein Getriebe aufweist und eine Getriebewelle die Hohlschnecke antreibt. Hier können Übersetzungen von 4:1 oder 6:1 zur Anwendung gelangen. Aufgrund einer solchen Übersetzung können auch die zu übertragenden Momente erhöht werden.

Bei einer weiteren Variante kann vorgesehen werden, dass die Hohlschnecke einen Eingriffsbereich aufweist, in dem ein von der Getriebewelle angetriebenes Eingriffsmittel zum Antreiben der Hohlwelle eingreift. Hier bietet sich z. B. eine Außenverzahnung an der Hohlschnecke und ein Zahnrad oder eine Verzahnung an der Getriebewelle an, wodurch z. B. eine weitere Untersetzung erzielbar ist.

Bei einer weiteren Ausführungsform kann die rückensteife Kette in einen Zwischenraum zwischen Hohlschnecke und Antriebsmotor umgelenkt und seitlich aus dem Zwischenraum herausgeführt sein. Eine solche Variante kann dazu dienen, dass eine Schubkraft quer zur Motorachse aufgebracht wird. Hierdurch ergibt sich eine vorteilhafte Anpassbarkeit an die verschiedenen Betätigungssituationen. Wenn der seitlich aus dem Zwischenraum herausgeführte Abschnitt der rückensteifen Kette der unbelastete Abschnitt der rückensteifen Kette ist, ergibt sich eine verschleißärmere Ausgestaltung im Vergleich zu einer Schubrichtung quer zur Motorachse.

Bevorzugt kann die rückensteife Kette eine Hülsen- oder Rollenkette sein und eine Breite aufweisen, die größer ist, als der Innendurchmesser der Hohlschnecke und kleiner ist als der Au-βendurchmesser der mindestens einen Innenwendel der Hohlschnecke. Günstigerweise reicht die Breite bis knapp an den Außendurchmesser der mindestens einen Innenwendel heran, um den größtmöglichen Eingriff zu erzielen. Eine Hülsen- oder Rollenkette wird aus Standardbauteilen aufgebaut und lässt sich auch sehr leicht mit Versteifungselementen versehen. Hier gibt es die unterschiedlichsten Ausführungsformen, die in aller Regel alternativ einsetzbar sind. Bei einer Rollenkette können zusätzlich noch die Rollen für eine reibungsarme Führung der rückensteifen Kette verwendet werden. Eine entsprechend daran angepasste Führung ist von Vorteil.

Um eine möglichst günstige Lastverteilung zu erreichen, kann die Hohlschnecke an ihrem Au-βenumfang gelagert sein. Es können demnach Lager mit großem Durchmesser zum Einsatz kommen, so dass entsprechend große Kräfte übertragbar sind.

Von Vorteil ist insbesondere eine Variante, bei der die Schubrichtung der rückensteifen Kette in Richtung der oder parallel zur Motorachse vom Antriebsmotor weg weist. Dies eröffnet auch die Möglichkeit, den Aktuator als Moduleinheit auszugestalten, die ein Gehäuse mit Anbringungseinrichtung aufweist und einer Öffnung zum Ein- und Ausfahren der Kette. Werden die Anbringungseinrichtung und die Öffnung an von einer wegweisenden Stirnseite des Gehäuses vorgesehen, so kann der Aktuator alternativ zu einem Hydraulik- oder Pneumatikzylinder verwendet werden, so dass ersatzweise ein elektrischer Antrieb zur Verfügung steht. Um das Eintragen von Schmutz zu verhindern, kann die Durchführung der Kette aus dem Gehäuse mit einer speziell geformten Bürste versehen werden. Diese Bürste könnte auch die Kette einschließlich der Elemente zur Reibungsminderung, insbesondere die Gleitschuhe, nachschmieren.

Des Weiteren können Positionselemente an der rückensteifen Kette angebracht sein, die mittels eines oder mehrerer Sensoren detektierbar sind. Bevorzugt sind die Positionselemente auf einfache Weise montier- und demontierbar, z.B. einclipsbar in die rückensteife Kette. Aufgrund der Tatsache, dass die rückensteife Kette kein Kettenrad zum Antrieb benötigt, kann das Positionierelement in einem Zwischenraum der Kette (z.B. zwischen zwei Hülsen oder Rollen) eingefügt werden. Günstigerweise kann es sich bei dem Positionierelement um einen Permanentmagenten mit Halterung handeln und bei dem Sensor um einen Magnetsensor, insbesondere einen Hallsensor. Durch die leichte Versetzbarkeit des Positionierelements lässt sich der Hubweg oder die Hubbegrenzung sehr leicht anpassen bzw. festlegen. Der Sensor sorgt dann für eine entsprechende Ansteuerung des Antriebsmotors. Dieser wird z.B. abgeschaltet. Auch ein elektronisches Steuergerät kann im Gehäuse eingebaut werden, so dass der Aktuator komplett funktionsfähig ist, lediglich mit Energie versorgt werden muss und durch Steuerbefehle aktiviert wird. Die Grundplatte kann dabei auch zur Ableitung der Verlustwärme z.B. aus den Leistungshalbleitern dienen.

Einklickbare magnetische Markierungen (Positionierlemente) können als Referenzpunkte benutzt werden, mit deren Hilfe die elektronische Steuerung den gesamten Fahrweg in beliebige Teilstrecken unterteilen kann. Im Folgenden werden Ausführungsbeispiele der vorliegenden Erfindung anhand von Zeichnungen näher erläutert. Es zeigen:
- Figur 1:: eine schematische Darstellung einer ersten Ausführungsform eines erfindungsgemäßen Aktuators,
- Figur 2:: eine Querschnittsdarstellung einer Ausführungsform einer Hohlschnecke,
- Figur 3:: eine perspektivische Darstellung einer geführten rückensteifen Kette und einer Hohlschnecke,
- Figur 4:: ein Vollschnitt der Anordnung aus Figur 3 entlang der Linie IV.-IV. geschnitten,
- Figur 5:: eine Vorderansicht der Anordnung aus Figur 3 und
- Figur 6:: eine schematische Darstellung einer zweiten Ausführungsform eines erfindungsgemäßen Aktuators.

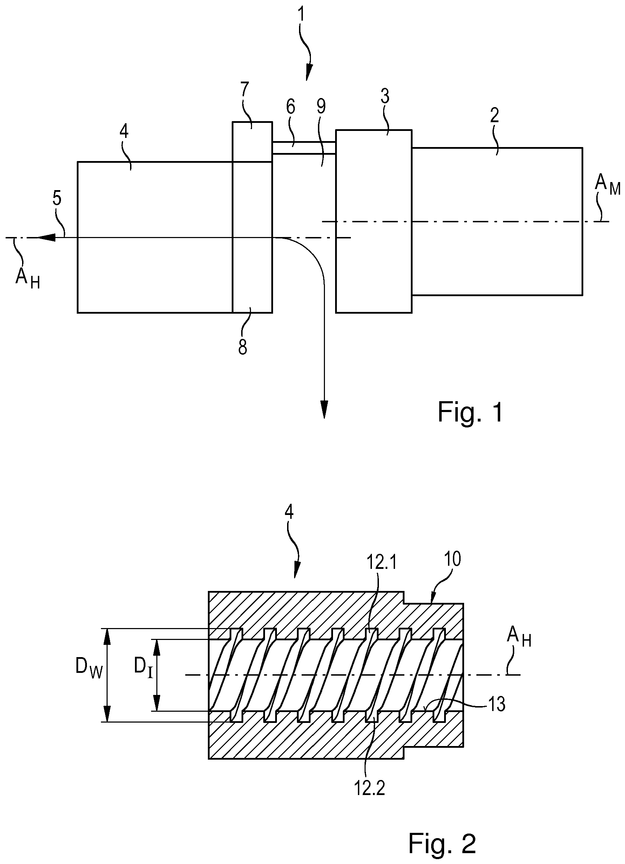

Der in Figur 1 schematisch dargestellte Aktuator 1 umfasst als wesentliche Bauteile einen elektrischen Antriebsmotor 2 mit einem Getriebe 3, eine vom Antriebsmotor 2 angetriebene Hohlschnecke 4 und einer rückensteifen Kette 5. Eingezeichnet sind noch die Getriebewelle 6 mit einem drehfesten angeordneten Zahnrad 7, das in eine Außenverzahnung 8 der Hohlwelle 4 eingreift. In dem Zwischenraum 9 zwischen dem Antriebsmotor 2 und der Hohlschnecke 4 wird die rückensteife Kette 5 umgelenkt. Die Umlenkung kann geführt oder nicht geführt erfolgen. Falls der seitlich aus dem Zwischenraum 9 herausgeführte Abschnitt der rückensteifen Kette 5 die Schubkraft quer zur Motorachse Aₘ aufbringen soll, muss eine entsprechend die Schubkraft aufnehmende Führung für die rückensteife Kette 5 vorgesehen werden. Es bietet sich daher für die meisten Einsatzzwecke an, die Schubkraft entlang der Hohlschneckenachse A_{H} vom Antriebsmotor 2 weg aufzubringen, weil dann die Umlenkung im Zwischenraum 9 im Wesentlichen im kraftfreien Abschnitt erfolgen kann. Der kraftfreie Abschnitt der rückensteifen Kette 5 kann dann in geeigneter Weise weiter umgelenkt werden, um ein Kettendepot zu erzeugen, z. B. entlang des Antriebsmotors 2 mit Getriebe 3.

Die dargestellte Ausführungsform hat den Vorteil, dass die Außenverzahnung 8 mit dem Zahnrad 7 eine weitere Untersetzung bewirkt, weshalb das Getriebe 3 vereinfacht ausgestaltet sein kann. Die Motorwelle greift entsprechend in das Getriebe 3 ein, so dass die Getriebewelle 6 angetrieben wird.

Bei der rückensteifen Kette 5 handelt es sich in bevorzugter Weise um eine Hülsen- oder Rollenkette, die mit der Innenkontur der Hohlschnecke in Eingriff kommt und von dieser in Längsrichtung bewegt wird.

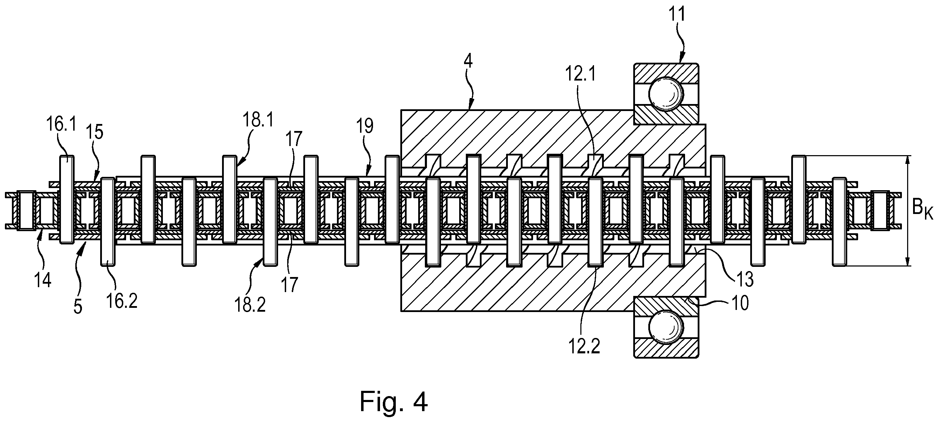

Anhand der Figur 2 wird nunmehr eine Ausführungsform einer Hohlschnecke 4 näher erläutert. Eine solche Hohlschnecke 4 kann auch bei einer Ausführungsform gemäß der Figur 1 zur Anwendung kommen. Die Hohlschnecke 4 weist an einem Ende einen zylindrischen Absatz 10 auf, der entweder zum Anordnen eines gehärteten, die Außenzahnung 8 bereitstellenden Zahnkranzes Verwendung finden kann (siehe Figur 1) oder zur Anordnung eines Lagers 11 dient (siehe z. B. Figur 4). Die Hohlschnecke 4 ist mehrgängig ausgestaltet und weist zwei Innenwendel 12.1 und 12.2 mit gleicher Steigung auf. Die jeweils die Innenwendel 12.1 oder 12.2 formende Nut ist im Querschnitt rechteckförmig. Die Innenwendel 12.1, 12.2 sind in die zylindrische Öffnung 3 der Hohlschnecke 4 eingearbeitet. Die Innenwendel 12.1 und 12.2 stehen mit geeigneten Eingriffsmitteln der rückensteifen Kette 5 in Eingriff und ein Drehen der Hohlschnecke 4 führt zu einer Längsbewegung der durch die zylindrische Öffnung 13 hindurchgeführten rückensteifen Kette 5.

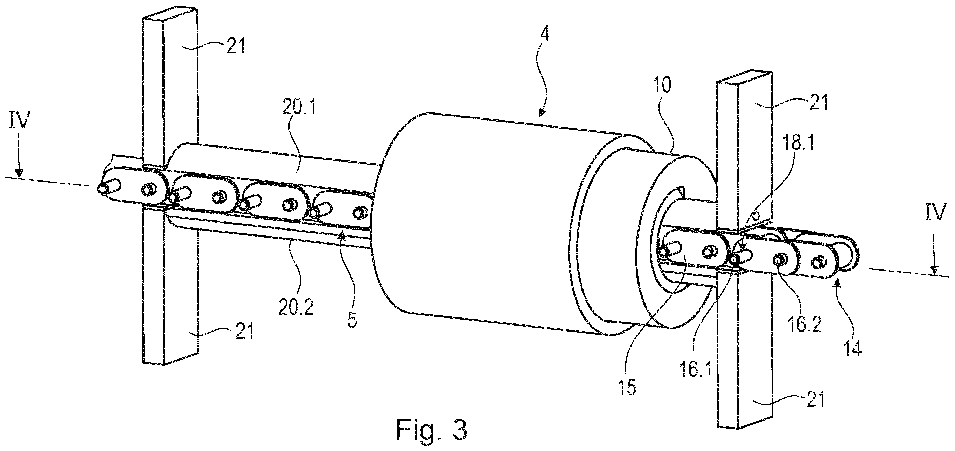

Im Folgenden wir nunmehr anhand der Figuren 3 - 5 das Zusammenwirken der rückensteifen Kette 5 mit der Hohlschnecke 4 anhand einer Ausführungsform näher erläutert.

Die dargestellte rückensteife Kette 5 ist eine Rollenkette mit sich abwechselnden Innenkettengliedern 14 und Außenkettengliedern 15. Jedes Innenkettenglied 14 umfasst in bekannter Weise zwei parallel zueinander angeordnete Innenlaschen, die mittels zwei im Abstand zueinander angeordneter Hülsen miteinander verbunden sind. Auf den Hülsen sind drehbar Rollen angeordnet. Jedes Außenkettenglied 15 umfasst zwei parallel zueinander angeordnete Außenlaschen, die mittels zweier Gelenkbolzen 16.1 und 16.2 miteinander verbunden sind. Die Gelenkbolzen 16.1 und 16.2 sind jeweils zum Bilden eines Kettengelenks durch die zugehörigen Hülsen der benachbarten Innenkettenglieder 14 hindurchgesteckt. Zwischen den Innenkettengliedern 14 und den Außenkettengliedern 15 sind Versteifungslaschen angeordnet, die zwar ein Verschwenken der rückensteifen Kette 5 in zumindest eine Richtung zulassen; jedoch die Übertragung einer Schubkraft mittels der rückensteifen Kette 5 gewähren. Die Kettenbolzen 16.1 und 16.2 sind verlängert ausgeführt und stehen jeweils wechselseitig seitlich hervor und formen entsprechende Eingriffsbereiche 18.1 und 18.2, die jeweils mit der zugehörigen Innenwendel 12.1 und 12.2 der Hohlschnecke 4 in Eingriff kommen. Die Gesamtbreite B_{K} der rückensteifen Kette 5 ist größer, als der Innendurchmesser D_{I} der zylindrischen Öffnung 13 und geringfügig kleiner als der Außendurchmesser D_{W} der Innenwendel 12.1 und 12.2. Die Verwendung einer mehrgängigen Hohlschnecke 4 führt zu einer großen Vorschubbewegung der rückensteifen Kette 5 bei erhöhter Eingriffsmöglichkeit durch die Eingriffsbereiche 18.1 und 18.2 der Kettenbolzen 16.1 und 16.2. Jeder zweite Kettenbolzen 16.1 oder 16.2 steht auf der gleichen Seite der rückensteifen Kette 5 zum Ausformen eines zugehörigen Eingriffsbereichs 18.1 und 18.2 über. Zusätzlich zur rückensteifen Kette 5 ist durch die Hohlschnecke 4 noch eine Führung 19 hindurch gesteckt, die aus zwei Führungsschienen 20.1 und 20.2 aufgebaut ist. Die Führungsschiene 20.1 und 20.2 sind an ihrem Rücken an die Kreisform der zylindrischen Öffnung 13 angepasst, so dass sie einen entsprechenden Abstand zu dieser aufweisen. An ihren nach innen weisenden Flächen sind die Führungsschienen 20.1, 20.2 so ausgestaltet, dass die Rollen der rückensteifen Kette 5 auf diesen entlang rollen. Die Stirnseiten der Führungsschienen 20.1 und 20.2 sind mit entsprechenden Befestigungsleisten 21 verschraubt. Die Länge der Führung 19 kann entsprechend des Konzeptes des Aktuators 1 gewählt werden. Je nachdem, ob die rückensteife Kette 5 lediglich gerade geführt wird oder, wie z. B. gemäß der Ausführungsform in Figur 1 seitlich abgeleitet wird, können entsprechend angepasste Führungen Verwendung finden.

Im Folgenden wird die Wirkungs- und Funktionsweise des erfindungsgemäßen Aktuators 1 näher erläutert. Die Verwendung einer sich drehenden, mittels des Antriebsmotors 2 angetriebenen Hohlschnecke 4 führt zu einer im Wesentlichen symmetrischen Krafteinleitung in die rückensteife Kette 5, da diese auf beiden Seiten mit dem Antriebselement, der Hohlschnecke 4 im Eingriff steht. Hierdurch lassen sich sehr gut Axialkräfte in die rückensteife Kette 5 einleiten. Auch die verschiedenen Antriebsformen mittels eines Antriebsmotors 2 und eines zugehörigen Getriebes 3 eröffnen zahlreiche Möglichkeiten der Ausgestaltung, so dass eine Anpassung an die verschiedenen Einbaugegebenheiten möglich ist. Um möglichst schlankbauende Aktuatoren 1 zu erzielen, wird jedoch bevorzugt, wenn die Hohlschnecke 4 und der Antriebsmotor 2 mit Getriebe 3 im Wesentlichen hintereinander angeordnet sind, wie dies in Figur 1 der Fall ist. Dabei kann auch ein leichter Versatz der Hülsenachse A_{H} und der Motorachse A_{M} vorhanden sein. Die Schubkraft kann bei einer Ausgestaltung gemäß der Figur 1 sowohl von dem Antriebsmotor 2 in Längsrichtung weg erfolgen (also im Wesentlichen parallel zur Motorachse A_{M}) als auch quer, bevorzugt senkrecht zur Motorachse A_{M}. Dies hängt maßgeblich von der Ausgestaltung der rückensteifen Kette 5 und der Führung ab. Bevorzugt wird jedoch die Schubkraft im Wesentlichen in Verlängerung bzw. parallel zur Motorachse A_{M} aufgebracht, so dass der lastfreie Strang der rückensteifen Kette 5 auch mehrfach umgelenkt werden kann, um die rückensteife Kette 5 in einem Kettendepot (nicht dargestellt) unterzubringen.

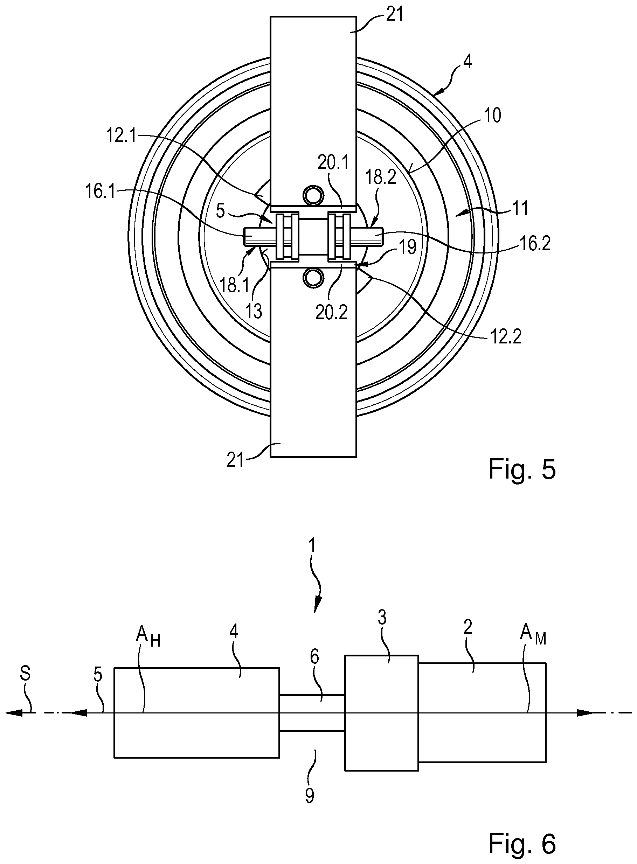

Im Folgenden wird nunmehr anhand der Figur 6 eine weitere Ausführungsform eines erfindungsgemäßen Aktuators 1 näher erläutert.

Der wesentliche Unterschied dieser Ausführungsform besteht darin, dass die Achse A_{H} der Hohlschnecke 4 im Wesentlichen koaxial zur Motorachse A_{M} des Antriebsmotors 2 ausgestaltet ist. Hierzu ist vorgesehen, dass die Motorwelle des Antriebsmotors 2 als Hohlwelle ausgestaltet ist. Auch das Getriebe 3 ist so ausgestaltet, dass die rückensteife Kette 5 zentral durch das Getriebe 3 hindurchgeführt werden kann. Hier bietet sich eine zentrale Getriebehohlwelle an. Auch die antreibende Getriebewelle 6 ist als Hohlwelle ausgestaltet und mit der Hohlschnecke 4 gekoppelt. Bei einer solchen Ausgestaltung ist es nicht zwingend notwendig, die rückensteife Kette 5 umzulenken. Es steht im Wesentlichen automatisch eine Betätigungslänge der rückensteifen Kette 5 zur Verfügung, die im Wesentlichen der Länge des Antriebsmotors 2 einschließlich der Länge des Getriebes 3 mit Getriebewelle 6 entspricht. Dennoch kann hinter dem Antriebsmotor 2 sich noch ein Kettendepot anschließen, in dem auch eine Umlenkung der rückensteifen Kette 5 erfolgen kann. Auch bei dieser Ausführungsform ist es möglich, dass die rückensteife Kette 5 in beide Richtungen eine Schubkraft überträgt. Bevorzugt wird jedoch die Schubkraft vom Antriebsmotor 2 weggerichtet aufgebracht, weil in dieser Richtung in aller Regel die größte Betätigungslänge zur Verfügung steht (s. Schubrichtung S in Fig. 6). Eine geeignete Führung 19 kann sich dann nicht durch die Hohlschnecke 4, sondern auch durch das Getriebe 3 und den Antriebsmotor 2 erstrecken.

Der erfindungsgemäße Aktuator 1 wird bevorzugt elektrisch angetrieben und kann vom Konzept her Hydraulikzylinder oder Pneumatikzylinder ersetzen. Deshalb sind schlanke Bauformen mit einer Schubkraftaufbringung in Längsrichtung entlang der Achse A_{H} der Hohlschnecke 4 und der Motorachse A_{M} des Antriebsmotors 2 zu bevorzugen. Der Antriebsmotor 2 zusammen mit dem Getriebe 3 und der Hohlschnecke 4 können in einem gemeinsamen Gehäuse untergebracht werden, an dessen Frontende der Betätigungsbereich der rückensteifen Kette 5 hervortritt. Auch ein Kettendepot kann innerhalb dieses Gehäuses untergebracht werden, so dass sich eine Baueinheit, ähnlich einem Hydraulikzylinder oder einem Pneumatikzylinder ergibt. Das Gehäuse kann an einem dem Betätigungsbereich der rückensteifen Kette 5 gegenüberliegenden Ende mit einer entsprechenden Anbringungseinrichtung, z. B. einem Gelenkkopf mit Kugelgelenk versehen werden. Mittels des hier beschriebenen Aktuators 1 können Schubkräfte aufgebracht werden, wie sie z. B. zur Fenster- oder Türöffnung etc. aufgebracht werden müssen. Auch andere Anwendungsmöglichkeiten, z. B. im Rahmend des Förder- und Transportwesens sind möglich.

### Bezugszeichenliste:

- 1: Aktuator
- 2: Antriebsmotor
- 3: Getriebe
- 4: Hohlschnecke
- 5: Rückensteife Kette
- 6: Getriebewelle
- 7: Zahnrad
- 8: Außenverzahnung
- 9: Zwischenraum
- 10: Absatz
- 11: Lager
- 12.1, 12.2: Innenwendel
- 13: zul. Öffnung
- 14: Innenkettenglied
- 15: Außenkettenglied
- 16.1, 16.2: Kettenbolzen
- 17: Versteifungslasche
- 18.1, 18.2: Eingriffsbereich
- 19: Führung
- 20.1, 20.2: Führungsschiene
- 21: Befestigungsleiste

- A_{H}: Hohlschneckenachse
- A_{M}: Motorachse
- D_{w}: Durchmesser Innenwendel
- D_{I}: Durchmesser Innenöffnung
- S: Schubrichtung

## Patentansprüche

1. Aktuator (1) mit einer rückensteifen Kette (5), einem Antriebsmotor (2) und einer vom Antriebsmotor (2) antreibbaren Schnecke, wobei die rückensteife Kette (5) sich abwechselnde Innen- und Außenkettenglieder (14), (15) und diese miteinander verbindende Kettenbolzen (16.1, 16.2) aufweist und zumindest einige der Kettenbolzen (16.1, 16.2) seitlich überstehende Eingriffsbereiche (18.1, 18.2) aufweisen, die mit der Schnecke zum Antreiben der rückensteifen Kette (5) im Eingriff stehen,
die Schnecke als Hohlschnecke (4) ausgeführt ist und die Eingriffsbereiche (18.1, 18.2) der Kettenbolzen (16.1, 16.2) mit einer Innenwendel (12.1, 12.2) der Hohlschnecke (4) im Eingriff stehen, **dadurch gekennzeichnet, dass** der Antriebsmotor (2) in Verlängerung der Hohlschnecke (4) angeordnet ist.

2. Aktuator (1) nach Anspruch 1,
**dadurch gekennzeichnet, dass**
die Motorachse (AM) und Hohlschneckenachse (AH) koaxial zueinander angeordnet sind.

3. Aktuator (1) nach Anspruch 1 und 2,
**dadurch gekennzeichnet, dass**
die Hohlschnecke (4) mehrgängig ausgestaltet ist und entsprechend mehrere Innenwendel (12.1, 12.2) aufweist.

4. Aktuator (1) nach einem der Ansprüche 1-3,
**dadurch gekennzeichnet, dass**
die Kettenbolzen (16.1 und 16.2) der rückensteifen Kette (5) abwechselnd auf der einen Seite und auf der anderen Seite der rückensteifen Kette (5) überstehen und entsprechende Eingriffbereiche (18.1, 18.2) formen.

5. Aktuator (1) nach Anspruch 4,
**dadurch gekennzeichnet, dass**
die Eingriffsbereiche (18.1, 18.2) der Kettenbolzen (16.1, 16.2) auf der einen Seite der rückensteifen Kette (5) in jeweils einer anderen Innenwendel (12.1, 12.2) eingreifen als die Eingriffsbereiche (18.2) der Kettenbolzen (16.2) auf der anderen Seite der rückensteifen Kette (5).

6. Aktuator (1) nach einem der vorhergehenden Ansprüche,
**dadurch gekennzeichnet, dass**
eine sich durch Hohlschnecke (4) erstreckende Führung (9) vorgesehen ist, die die Vorder- und/oder die Rückseite der rückensteifen Kette (5) führt.

7. Aktuator (1) nach einem der vorhergehenden Ansprüche,
**dadurch gekennzeichnet, dass**
der Antriebsmotor (2) eine Hohlwelle aufweist, durch die die rückensteife Kette (5) hindurchgeführt ist.

8. Aktuator (1) nach Anspruch 7,
**dadurch gekennzeichnet, dass**
eine sich durch Hohlwelle erstreckende Führung vorgesehen ist, die die Vorder- und/oder die Rückseite der rückensteifen Kette (5) führt.

9. Aktuator (1) nach einem der vorhergehenden Ansprüche,
**dadurch gekennzeichnet, dass**
der Antriebsmotor (2) ein Getriebe (3) aufweist und eine Getriebewelle (6) die Hohlschnecke (4) antreibt.

10. Aktuator (1) nach Anspruch 9,
**dadurch gekennzeichnet, dass**
die Hohlschnecke (4) einen Eingriffsbereich aufweist, in den ein von der Getriebewelle (6) angetriebenes Eingriffsmittel zum Antreiben der Hohlschnecke (4) eingreift.

11. Aktuator (1) nach einem der vorhergehenden Ansprüche,
**dadurch gekennzeichnet, dass**
die rückensteife Kette (5) in einem Zwischenraum (9) zwischen der Hohlschnecke (4) und dem Antriebsmotor (2) umgelenkt und seitlich aus dem Zwischenraum (9) herausgeführt ist.

12. Aktuator (1) nach Anspruch 11,
**dadurch gekennzeichnet, dass**
der seitlich aus dem Zwischenraum (9) herausgeführte Abschnitt der rückensteifen Kette (5) der unbelastete Abschnitt der rückensteifen Kette (5) ist.

13. Aktuator (1) nach einem der vorhergehenden Ansprüche,
**dadurch gekennzeichnet, dass**
die rückensteife Kette (5) eine Hülsen- oder Rollenkette ist, die eine Breite (BK) aufweist, die größer ist als der Innendurchmesser (DI) der Hohlschnecke (4) und kleiner ist als der Außendurchmesser (AW) der mindestens einen Innenwendel (16.1, 16.2) der Hohlschnecke (4).

14. Aktuator (1) nach einem der vorhergehenden Ansprüche,
**dadurch gekennzeichnet, dass**
die Hohlschnecke (4) an ihrem Außenumfang gelagert ist.

15. Aktuator (1) nach einem der vorhergehenden Ansprüche,
**dadurch gekennzeichnet, dass**
die Schubrichtung der rückensteifen Kette (5) in Richtung der oder parallel zur Motorachse (AM) vom Antriebsmotor (2) weg weist.

## Claims

1. Actuator (1) with a rigid-back chain (5), a drive motor (2) and a worm which is drivable by the drive motor (2), the rigid-back chain (5) having alternating inner and outer chain members (14, 15) and chain studs (16.1, 16.2) which connect these together and at least some of the chain studs (16.1, 16.2) having laterally protruding engagement regions (18.1, 18.2) which are engaged with the worm for driving the rigid-back chain (5),
the worm being configured as hollow worm (4) and the engagement regions (18.1, 18.2) of the chain studs (16.1, 16.2) being engaged with an inner spiral (12.1, 12.2) of the hollow worm (4), **characterised in that** the drive motor (2) is disposed in the extension of the hollow worm (4).

2. Actuator (1) according to claim 1,
**characterised in that**
the motor axis (AM) and the hollow worm axis (AH) are disposed coaxially relative to each other.

3. Actuator (1) according to claim 1 and 2,
**characterised in that**
the hollow worm (4) has a multiple-threaded configuration and has correspondingly a plurality of inner spirals (12.1, 12.2).

4. Actuator (1) according to one of the claims 1 - 3,
**characterised in that**
the chain studs (16.1 and 16.2) of the rigid-back chain (5) protrude alternately on the one side and on the other side of the rigid-back chain (5) and form corresponding engagement regions (18.1, 18.2).

5. Actuator (1) according to claim 4,
**characterised in that**
the engagement regions (18.1, 18.2) of the chain studs (16.1 16.2) engage on the one side of the rigid-back chain (5) in respectively an inner spiral (12.1, 12.2) other than the engagement regions (18.2) of the chain studs (16.2) on the other side of the rigid-back chain (5).

6. Actuator (1) according to one of the preceding claims,
**characterised in that**
a guide (9) which extends through the hollow worm (4) and guides the front- and/or the rear-side of the rigid-back chain (5) is provided.

7. Actuator (1) according to one of the preceding claims,
**characterised in that**
the drive motor (2) has a hollow shaft through which the rigid-back chain (5) is guided.

8. Actuator (1) according to claim 7,
**characterised in that**
a guide which extends through the hollow shaft and guides the front- and/or the rear-side of the rigid-back chain (5) is provided.

9. Actuator (1) according to one of the preceding claims,
**characterised in that**
the drive motor (2) has a transmission (3) and a transmission shaft (6) drives the hollow worm (4).

10. Actuator (1) according to claim 9,
**characterised in that**
the hollow worm (4) has an engagement region in which an engagement means which is driven by the transmission shaft (6) engages in order to drive the hollow worm (4).

11. Actuator (1) according to one of the preceding claims,
**characterised in that**
the rigid-back chain (5) is deflected in an intermediate space (9) between the hollow worm (4) and the drive motor (2) and is guided out laterally from the intermediate space (9).

12. Actuator (1) according to claim 11,
**characterised in that**
the portion of the rigid-back chain (5) which is guided out laterally from the intermediate space (9) is the non-loaded portion of the rigid-back chain (5).

13. Actuator (1) according to one of the preceding claims,
**characterised in that**
the rigid-back chain (5) is a sleeve-type- or roller chain which has a width (BK) which is greater than the inner diameter (DI) of the hollow worm (4) and is smaller than the outer diameter (AW) of the at least one inner spiral (16.1, 16.2) of the hollow worm (4).

14. Actuator (1) according to one of the preceding claims,
**characterised in that**
the hollow worm (4) is mounted on the outer circumference thereof.

15. Actuator (1) according to one of the preceding claims,
**characterised in that**
the thrust direction of the rigid-back chain (5) points away in the direction of or parallel to the motor axis (AM) of the drive motor (2).

## Revendications

1. Actionneur (1) comportant une chaîne rigide à l'arrière (5), un moteur d'entraînement (2) et une vis pouvant être entraînée par le moteur d'entraînement (2), la chaîne rigide à l'arrière (5) comportant des maillons de chaîne (14) intérieurs et extérieurs alternés, (15) et des axes de chaîne (16.1, 16.2) les reliant l'un à l'autre, et au moins certains des axes de chaîne (16.1, 16.2) présentent des zones de mise en prise (18.1, 18.2) faisant saillie latéralement qui sont en prise avec la vis sans fin pour entraîner la chaîne rigide à l'arrière (5), la vis sans fin est conçue comme une vis sans fin creuse (4) et les zones de mise en prise (18.1, 18.2) des axes de chaîne (16.1, 16.2) sont en prise avec une hélice intérieure (12.1, 12.2) de la vis sans fin creuse (4), **caractérisé en ce que** le moteur d'entraînement (2) est disposé en prolongement de la vis sans fin creuse (4).

2. Actionneur (1) selon la revendication 1, **caractérisé en ce que** l'axe du moteur (AM) et l'axe de la vis creuse (AH) sont disposés coaxialement l'un à l'autre.

3. Actionneur (1) selon les revendications 1 et 2, **caractérisé en ce que** la vis sans fin creuse (4) est réalisée avec plusieurs spires et présente en conséquence plusieurs bobines internes (12.1, 12.2).

4. Actionneur (1) selon l'une quelconque des revendications 1 à 3, **caractérisé en ce que** les axes de chaîne (16.1 et 16.2) de la chaîne rigide à l'arrière (5) font saillie alternativement d'un côté et de l'autre de la chaîne rigide à l'arrière (5) et forment des zones de mise en prise (18.1 et 18.2) correspondantes.

5. Actionneur (1) selon la revendication 4, **caractérisé en ce que** les zones de mise en prise (18.1, 18.2) des axes de chaîne (16.1, 16.2) d'un côté de la chaîne rigide à l'arrière (5) viennent en prise dans une hélice intérieure (12.1, 12.2) différente respectivement des zones de mise en prise (18.2) des axes de chaîne (16.2) de l'autre côté de la chaîne rigide à l'arrière (5).

6. Actionneur (1) selon l'une quelconque des revendications précédentes, **caractérisé en ce qu'**il est prévu un guidage (9) traversant une vis sans fin creuse (4) qui guide l'avant et/ou l'arrière de la chaîne rigide à l'arrière (5).

7. Actionneur (1) selon l'une quelconque des revendications précédentes, **caractérisé en ce que** le moteur d'entraînement (2) présente un arbre creux à travers lequel passe la chaîne rigide à l'arrière (5).

8. Actionneur (1) selon la revendication 7, **caractérisé en ce qu'**il est prévu un guidage s'étendant à travers un arbre creux qui guide l'avant et/ou l'arrière de la chaîne rigide à l'arrière (5).

9. Actionneur (1) selon l'une quelconque des revendications précédentes, **caractérisé en ce que** le moteur d'entraînement (2) présente un engrenage (3) et un arbre d'engrenage (6) entraîne la vis sans fin creuse (4).

10. Actionneur (1) selon la revendication 9, **caractérisé en ce que** la vis sans fin creuse (4) présente une zone de mise en prise dans laquelle un moyen de mise en prise entraîné par l'arbre de transmission (6) vient en prise pour entraîner la vis sans fin creuse (4).

11. Actionneur (1) selon l'une quelconque des revendications précédentes, **caractérisé en ce que** la chaîne rigide à l'arrière (5) est déviée dans un espace intermédiaire (9) entre la vis sans fin creuse (4) et le moteur d'entraînement (2) et guidée latéralement hors de l'espace intermédiaire (9).

12. Actionneur (1) selon la revendication 11, **caractérisé en ce que** la partie de la chaîne rigide à l'arrière (5) guidée latéralement hors de l'espace intermédiaire (9) est la partie non chargée de la chaîne rigide à l'arrière (5).

13. Actionneur (1) selon l'une quelconque des revendications précédentes, **caractérisé en ce que** la chaîne rigide à l'arrière (5) est une chaîne à rouleaux ou à douilles dont la largeur (BK) est supérieure au diamètre intérieur (DI) de la vis sans fin creuse (4) et inférieure au diamètre extérieur (AW) de l'au moins une spirale intérieure (16.1, 16.2) de la vis sans fin creuse (4).

14. Actionneur (1) selon l'une quelconque des revendications précédentes, **caractérisé en ce que** la vis sans fin creuse (4) est montée sur sa périphérie extérieure.

15. Actionneur (1) selon l'une quelconque des revendications précédentes, **caractérisé en ce que** la direction de poussée de la chaîne rigide à l'arrière (5) s'éloigne du moteur d'entraînement (2) dans la direction de l'axe du moteur (AM) ou parallèlement à celui-ci.
